# EUROPEAN PATENT SPECIFICATION

(11) **EP 1 377 101 B1**
(45) Date of publication and mention of the grant of the patent: **27.09.2006**
(21) Application number: 03101469.9
(22) Date of filing: 22.05.2003
(51) Int. Cl.: H04Q 7/38

(54) **Method and controller for updating an active set of a subscriber terminal in a cellular radio system**
Verfahren und Steuereinheit zur Aktualisierung einer aktiven Menge eines Teilnehmerendgeräts in einem zellularen Funksystem
Méthode et unité de commande pour la mise à jour d'un ensemble actif d'un terminal d'abonné dans un système radio cellulaire

(30) Priority: 31.05.2002 FI 20021042
(43) Date of publication of application: 02.01.2004
(73) Proprietor: TeliaSonera Finland Oyj, 00510 Helsinki (FI)
(72) Inventor: Ruusunen, Kimmo, 04250 Kerava (FI); Heikkilä, Tommi K., 00200 Helsinki (FI)
(74) Representative: Pykälä, Timo Tapani

(56) References cited:
- EP-A- 1 032 237
- EP-A- 1 179 961
- WO-A-01/49061
- DE-A- 19 961 516

## Description

### FIELD

The invention relates to a method of updating an active set of a subscriber terminal in a cellular radio system and to a controller to be placed in a network part of a cellular radio system and used for updating an active set of a subscriber terminal.

### BACKGROUND

In cellular radio networks, a subscriber terminal and a base station measure the radio connection between the subscriber terminal and the base station. Radio connections can be placed in different sets, for example: an active set, a monitored set, and a detected set.

An active set includes identifiers for the radio connections the subscriber terminal uses for implementing a procedure called soft or softer handover. The implementation of said procedure results in macrodiversity, i.e. a situation wherein, for improving the quality of the radio connection, the same signal is transferred between a subscriber terminal and a base station/base stations using more than one radio connection.

In soft handover, a subscriber terminal has a radio connection to more than one base station simultaneously. Usually, the same frequency is used for the radio connections, the subscriber terminal processing the signals of all radio connections as multi-path propagated signals. In a CDMA system (Code Division Multiple Access), each radio connection usually employs a different spreading code, as distinct from normal multi-path propagation, wherein the multi-path propagated components are components delayed in different ways in the time domain of the same signal.

In softer handover, a subscriber terminal has a radio connection to different cells of one base station simultaneously. As for the subscriber terminal, the processing of such a situation does not differ from a normal soft handover.

A monitored set includes identifiers for the radio connections that are possible candidates for handover, but have not yet been added to an active set. The subscriber terminal is informed of these in a neighbour cell list.

A detected set includes other radio connections that the subscriber terminal has detected when monitoring its radio environment, but are not included in the neighbour cell list.

A radio connection is added to an active set if its measured signal strength exceeds a threshold value, and a radio connection is deleted from an active set if its measured signal strength is below the threshold value. In addition, a timer may be used, i.e. for a given time the radio connection has to either exceed or be below the threshold value before it is added to or deleted from an active set, in order for the contents of the active set not to vary too fast.
The patent publication DE 19961516 presents a method for controlling a connection relay in a radio system.

The problem in the described active set update is that a maximum size is specified for the active set, the active set maximum size being a cell-specific constant parameter. The solution uses up radio resources and channel elements, since the active set is filled with radio connections if the threshold values allow it.

### BRIEF DESCRIPTION

The object of the invention is to provide an improved method of updating an active set of a subscriber terminal in a cellular radio system and an improved controller to be placed in a network part of a cellular radio system and used for updating an active set of a subscriber terminal.

An aspect of the invention provides a method of updating an active set of a subscriber terminal in a cellular radio system, comprising: measuring the radio connections of at least one base station to the subscriber terminal in the subscriber terminal, and signalling downlink measurement information to a controller located in a network part of the cellular radio system; measuring the radio connections of the subscriber terminal to a base station in at least one base station, and signalling uplink measurement information to the controller; updating the radio connections included in the active set in the controller on the basis of the measurement information; deciding the size of the active set in the controller on the basis of the measurement information using, not only a parameter descriptive of the signal strength and quality of the radio connection included in the measurement information, but also at least one of the following parameters belonging to the measurement information: a parameter descriptive of the signal strength of the radio connection, a parameter descriptive of the error ratio of the radio connection, a parameter descriptive of the ratio between the signal and the interference of the radio connection; comparing the value of a parameter included in the measurement information with a predetermined threshold value, using first threshold values when the subscriber terminal operates in normal mode and using second threshold values when the subscriber terminal operates in compressed mode, and determining the size of the active set based on how the different parameters exceed or are below the threshold value; and signalling the active set from the controller to the subscriber terminal.

An aspect of the invention provides a controller to be placed in a network part of a cellular radio system and used for updating an active set of a subscriber terminal, comprising: data transmission equipment configured to receive downlink measurement information signalled from the subscriber terminal, the information including results of measurements carried out in the subscriber terminal regarding the radio connections of at least one base station to the subscriber terminal, and to receive uplink measurement information signalled from at least one base station, the information including results of measurements carried out in the base station regarding the radio connections of the subscriber terminal to the base station; a control unit configured to update the radio connections included in the active set on the basis of the measurement information, and to signal the active set to the subscriber terminal; the control unit further being configured to decide the size of the active set on the basis of the measurement information using not only the parameter descriptive of the signal strength and quality of the radio connection included in the measurement information, but also at least one of the following parameters belonging to the measurement information: a parameter descriptive of the signal strength of the radio connection, a parameter descriptive of the error ratio of the radio connection, a parameter descriptive of the ratio between the signal and the interference of the radio connection; to compare the value of a parameter included in the measurement information with a predetermined threshold value, to use first threshold values when the subscriber terminal operates in normal mode and to use second threshold values when the subscriber terminal operates in compressed mode, and to determine the size of the active set based on how the different parameters exceed or are below the threshold value.

Preferred embodiments of the invention are described in the dependent claims.

The invention is based on not only updating the contents of the active set, but also adjusting the size of the active set on the basis of the measurement information.

The method and controller of the invention bring about a plurality of advantages. The number of radio connections used in macrodiversity, and thus the number of channel elements, can be optimized subscriber terminal-specifically. In an embodiment, the power increases, disturbances and errors caused by the use of the compressed mode are reduced when an optimized number of cells is in use with which the subscriber terminal communicates simultaneously. In an embodiment, a shared downlink channel can be used also in areas that would have more cells in the active set if the size of the active set were larger than one.

### LIST OF THE FIGURES

In the following, preferred embodiments of the invention will be described in detail with reference to the accompanying drawings, in which
Figure 1 shows an example of the structure of a cellular radio system;
Figure 2 shows the cells of a cellular radio system and the location of subscriber terminals in the cells;
Figure 3 is a flow diagram illustrating a method of updating an active set of a subscriber station, and
Figure 4 is a flow diagram illustrating some embodiments of the method.

### DESCRIPTION OF THE EMBODIMENTS

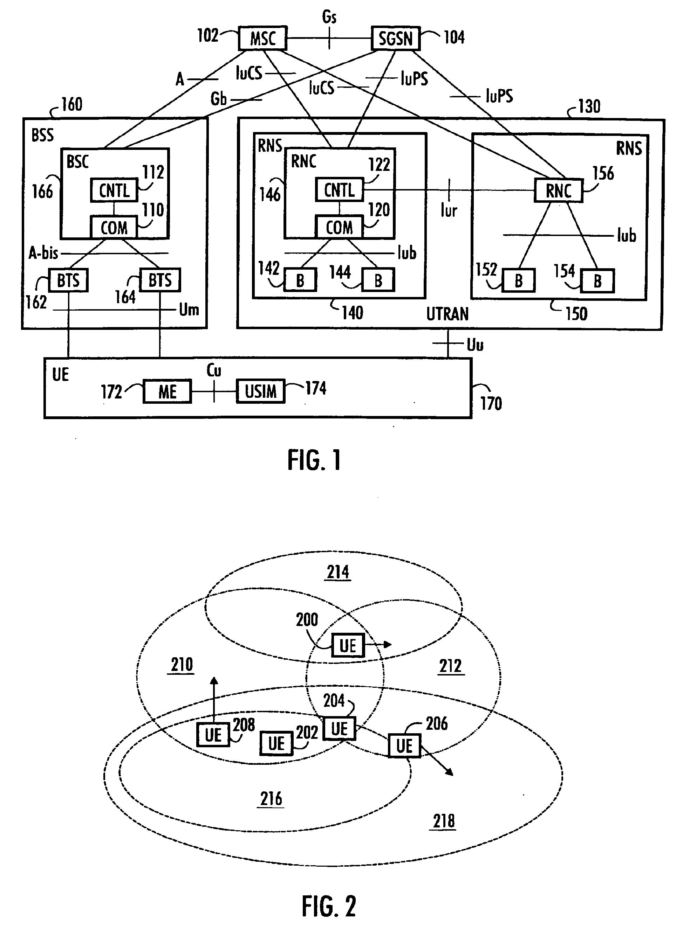

Figure 1 illustrates a cellular radio system comprising network elements of different generations in parallel: a second generation GSM (Global System for Mobile Communications), a radio system based on the GSM and using 2.5-generation EDGE technology (Enhanced Data Rates for Global Evolution) to increase the data transfer rate and usable also for implementing packet transfer in the GPRS system (General Packet Radio System), and a third-generation radio system, known at least by the names IMT-2000 (International Mobile Telecommunications 2000) and UMTS (Universal Mobile Telecommunications System). However, the embodiments are not restricted to these systems described by way of example, but a person skilled in the art is able to apply the teachings also to other radio systems, wherein updating an active set is known. If need be, additional information about a cellular radio system and the use of active sets is available in the literature of the field, e.g. publication Juha Korhonen: Introduction to 3G Mobile Communications. Artech House 2001. ISBN 1-58053-287-X.

Figure 1 is a simplified block diagram describing the most important parts of a radio system at network element level and the interfaces between them. The structure and functions of the network elements are not described in any detail, since they are generally known.

The main parts of a cellular radio network include a core network, a radio access network 130, and a subscriber terminal 170. The term UTRAN is short for UMTS Terrestrial Radio Access Network, i.e. the radio access network 130 belongs to the third generation and is implemented by the wideband code division multiple access technique (WCDMA). Figure 1 also shows a base station system 160, which belongs to the 2/2.5 generation and is implemented by the time division multiple access technique (TDMA).

A general specification may be presented stating that a radio system is composed of a subscriber terminal, which may also be called e.g. user equipment (UE) and mobile phone, and a network part including all fixed infrastructure of the radio system, i.e. the core network, the radio access network, and the base station system.

In our example, the structure of the core network corresponds to the combined structure of the GSM and GPRS systems, wherein the GSM network elements answer for the implementation of circuit-switched connections, and the GPRS network elements for the implementation of packet-switched connections. Of the core network, Figure 1 only shows a mobile services switching centre 102 and a serving GPRS support node 104.

The mobile services switching centre (MSC) 102 is the core of the circuit-switched side of the core network. The same mobile services switching centre 102 can be used to serve the connections of both the radio access network 130 and the base station system 160. The tasks of the mobile services switching centre 102 include connection switching, paging, subscriber terminal location registration, handover management between radio network subsystems, collecting subscriber billing information, data encryption parameter management, and echo cancellation.

The serving GPRS support node (SGSN) 104 is the core of the packet-switched side of the core network. The main task of the serving GPRS support node 104 is to send and receive packets together with the subscriber terminal 170 supporting packet-switched transfer by using the radio access network 130 or the base station system 160. The serving GPRS support node 104 includes subscriber data and location data regarding the subscriber terminal 170.

The base station system 160 is composed of a base station controller (BSC) 166 and base transceiver stations (BTS) 162, 164. The base station controller 166 controls the base transceiver station 162, 164. In principle, the aim is to locate the devices implementing a radio path and the related functions in the base transceiver station 162, 164, and the management devices in the base station controller 166.

The base station controller 166 attends to for instance the following tasks: management of base transceiver station 162, 164 radio resources, intercell handovers, frequency management, i.e. allocation of frequencies to base transceiver stations 162, 164, management of frequency hopping sequences, measurement of uplink time delays, implementation of the operation and maintenance interface, and management of power control.

The base transceiver station 162, 164 comprises at least one transceiver for implementing one carrier, i.e. eight timeslots, i.e. eight physical channels. One base transceiver station 162, 164 typically comprises from one to three cells. The diameter of a cell may vary from tens of meters to tens of kilometres. The tasks of a base transceiver station 162, 164 include for instance: calculation of TA (timing advance), uplink measurements, channel coding, encryption, decryption and frequency hopping.

The radio access network 130 is composed of radio network subsystems 140, 150. Each radio network subsystem 140, 150 is composed of radio network controllers (RNC) 146, 156 and nodes B 142, 144, 152, 154. Node B is quite an abstract concept, and the term base station is often used instead.

The functionality of the radio network controller 140, 150 corresponds approximately to the base station controller 166 of the GSM system, and node B 142, 144, 152, 154 to the base station 162, 164 of the GSM system. Solutions are also available, wherein the same device operates both as a base station and as a node B, i.e. said device can be used to simultaneously implement both the TDMA and the WCDMA radio interface.

The subscriber terminal 170 is composed of two parts: mobile equipment (ME) 172 and a UMTS subscriber identity module (USIM) 174. The GSM system naturally employs the system's special identity unit. The su b-scriber terminal 170 comprises at least one transceiver for implementing a radio connection to the radio access network 130 or to the base station system 160. The subscriber terminal 170 may comprise at least two different subscriber identity units. In addition, the subscriber terminal 170 may comprise an antenna, a user interface, and a battery. At present, diverse subscriber terminals 170 exist, e.g. vehicle-mounted and portable. Properties are also implemented in subscriber terminals 170 that are better known from personal or portable computers. An example of such a subscriber terminal 170 is the Nokia® Communicator®. The USIM 174 comprises information associated with the user, and particularly information relating to information security, e.g. an encryption algorithm.

**Table 1**

| Interface | Between network elements |
|---|---|
| Uu | UE-UTRAN |
| lu | UTRAN-CN |
| luCS | UTRAN-MSC |
| luPS | UTRAN-SGSN |
| Cu | ME-USIM |
| lur | RNC-RNC |
| lub | RNC-B |
| A | BSS-MSC |
| Gb | BSC-SGSN |
| A-bis | BSC-BTS |
| Um | BTS-UE |

Table 1 describes the interfaces between the different network elements shown in Figure 1. In the UMTS, the most important interfaces include the lu interface between the core network and the radio access network, the interface being divided into a circuit-switched side interface luCS (CS = Circuit Switched) and a packet-switched side interface luPS (PS = Packet Switched), and the Uu interface between the radio access network and the subscriber terminal. In the GSM, the most important interfaces include the A interface between the base station controller and the mobile services switching centre, the Gb interface between the base station controller and the serving GPRS support node, and the Um interface between the base station and the subscriber terminal.

As was stated above, in their area, the base station controller 166 and the radio network controller 146 control the management of the radio resources of the base stations 142, 144, 162, 164, and intercell handovers, i.e. they also answer for measures relating to soft and softer handover for implementing macrodiversity. One of these measures is processing an active set, described above, for which the controller 146, 166 to be placed in a network part of the cellular radio system and used for updating an active set of the subscriber terminal 170 can be used. The term 'controller' refers to e.g. a base station controller and a radio network controller, but it can also be implemented in a decentralized manner by transferring the necessary functions in association with the base stations, or at least in principle also by transferring the functions in association with the mobile services switching centre.

In the example of Figure 1, the controller is the radio network controller 146 and/or the base station controller 166. The controller 146, 166 comprises data transmission equipment 110, 120 and a control unit 112, 122.

The data transmission equipment 110, 120 can be implemented in prior art manners. In the base station system 160, data transmission at the A-bis interface between the base station controller 166 and the base station 162, 164, and, similarly, in the radio network subsystem 140, data transmission at the lub interface between the radio network controller 146 and the base stations 142, 144, can be implemented using the data transmission equipment 110 built for the purpose, which equipment then usually comprises a multiplexer and data transmission means for implementing for instance a two-way data transmission connection having a rate of 2 Mbps. The data transmission rate may naturally be higher or lower, and other implementations may be used in addition to the described PCM link (Pulse Code Modulation), for instance solutions based on the ATM (Asynchronous Transfer Mode) and/or IP (Internet Protocol) technologies. At present, the data transmission equipment 110, 120 is usually implemented with hardware and software, but also a pure hardware implementation, for instance a circuit built from separate logics components or an application-specific integrated circuit (ASIC), is feasible.

The data transmission equipment 110, 120 is configured to receive measurement information signalled from the subscriber terminal 170, the information including results of measurements carried out in the subscriber terminal 170 regarding the radio connections Uu, Um of at least one base station 142, 144, 162, 164 to the subscriber terminal 170. The measurement information originating from the subscriber terminal 170 includes information about the downlink transmission path of the two-way radio connection Uu, Um between the subscriber terminal 170 and the base station 142, 144, 162, 164, i.e. in the transmission direction from the base station towards the subscriber terminal.

In addition, the data transmission equipment 110, 120 is configured to receive measurement information signalled from at least one base station 142, 144, 162, 164, the information including results of measurements carried out in the base station 142, 144, 162, 164 regarding the radio connections Uu, Um of the subscriber terminal 170 to the base station 142, 144, 162, 164. The measurement information originating from the base station 142, 144, 162, 164 includes information about the uplink transmission path of the two-way radio connection Uu, Um between the subscriber terminal 170 and the base station 142, 144, 162, 164, i.e. in the transmission direction from the subscriber terminal towards the base station.

The downlink measurement information collected in the subscriber terminal 170 is first transferred to some base station 142, 144, 162, 164, where the uplink measurement information collected in said base station can be combined thereto. From the base station 142, 144, 162, 164, both downlink measurement information and uplink measurement information are thus transferred, either together or separately, to the controller 146, 166.

The measurement information collected, for both uplink and downlink, is measurement information according to prior art, usually collected in cellular radio systems about the radio connections Um, Uu. Using the concepts active set, monitored set and detected set, determined above, it can be stated that the measurement information collected includes information about at least the radio connections belonging to the active set, usually also about the radio connections belonging to the monitored set, and occasionally possibly also about the radio connections belonging to the detected set. The measurement information may include both parameters generated directly by measurement and parameters generated computationally. The measurement information may include for instance the following parameters: a parameter descriptive of the signal strength and quality of the radio connection, a parameter descriptive of the error ratio of the radio connection, a parameter descriptive of the ratio between the signal and the interference of the radio connection (e.g. the Signal-to-Interference Ratio, SIR). The parameter descriptive of the signal strength and quality of the radio connection may be parameter CPICH Ec/lo descriptive of the energy and interference included in one chip of the common pilot channel (CPICH). The parameter descriptive of the signal strength of the radio connection may be the received signal power of the common pilot channel, e.g. CPICH RSCP (Received Signal Code Power). The parameter descriptive of the error ratio of the radio connection may be e.g. the frame error ratio FER, the bit error ratio BER or the block error ratio BLER.

The control unit 112, 122 controls the operation of the controller 146, 166, and it is nowadays usually implemented as a processor including software, but also different hardware implementations are feasible, for instance a circuit built from separate logics components or one or more application-specific integrated circuits (ASIC). A hybrid of these implementations is also feasible. When selecting the implementation, a person skilled in the art takes into account for instance the requirements set on the power consumption of the controller 146, 166, the processing power required, manufacturing costs and manufacturing volumes, and the requirements set on the update and maintenance properties of the controller 146, 166.

The control unit 112, 122 is configured to update the radio connections Uu belonging to the active set on the basis of the measurement information, to decide the size of the active set on the basis of the measurement information, and to signal the active set to the subscriber terminal 170. The active set is signalled for instance using an active set update message. The active set update message may include identity data about downlink radio connections, e.g. Radio Link Ids. The radio connections belonging to the active set may be updated for instance in the manner described above, i.e. a radio connection is added to an active set if its measured signal strength exceeds a threshold value, and a radio connection is deleted from an active set if its measured signal strength is below the threshold value. In addition, a timer may be used, i.e. for a given time the radio connection has to either exceed or be below the threshold value before it is added to or deleted from an active set, in order for the contents of the active set not to vary too fast. For updating the active set, for instance the EPICH Ec/lo parameter may be used, which is a parameter expressing the coverage and quality of the downlink transmission path of the pilot channel of a cell. In the update, instead of a comparison of absolute values, usually a relative comparison is used implemented for instance such that set for a given time the quality/strength of the radio connection to be added to the active set has to be less than e.g. four decibel (4 dB) worse than the best radio connection in the active set. The comparison method can be said to be a window method based on relative values.

In accordance with prior art, a maximum size is determined for the active set, the size being a cell-specific parameter. In the present solution, the size of the active set can also be changed during the update, if required. Changing the size of the active set allows the optimization of the nu m-ber of radio connections used in soft and softer handover. The decision on the size of the active set is made based on the measurement information. In an embodiment, the control unit 112, 122 is configured to update the decided size of the active set in the parameter determining the maximum size of the active set.

In the present invention, when deciding upon the size of the active set, the control unit 112, 122 is configured to use, not only the parameter descriptive of the signal strength and quality of the radio connection included in the measurement information, but also the above described parameters belonging to the measurement information: the parameter descriptive of the signal strength of the radio connection, the parameter descriptive of the error ratio of the radio connection, the parameter descriptive of the ratio between the signal and the interference of the radio connection.

In the present invention when deciding upon the size of the active set, the control unit 112, 122 is configured to compare the value of a parameter included in the measurement information with a predetermined threshold value and to determine the size of the active set based on how the different parameters exceed or are below the threshold value.

In the present invention the control unit 112, 122 is configured to use first threshold values when the subscriber terminal 170 operates in a normal mode and second threshold values when the subscriber terminal 170 operates in a compressed mode. The compressed mode is a function for creating breaks in the transmission in the radio connection between the base station 142, 144, 162, 164 and the subscriber terminal 170, during which breaks the subscriber terminal 170 makes measurements of other frequencies or of the transmissions of another radio system.

In an embodiment, the control unit 112, 122 is configured to use third threshold values when the subscriber terminal 170 uses the downlink shared channel (DSCH). The DSCH is a downlink traffic channel divided time-dividedly between several different subscriber terminals and suitable for instance for interactive service and background services. The use of the DSCH is described for instance in publication WO 02/01893. In an embodiment, the control unit 112, 122 is configured to decide that the size of the active set is one when the subscriber terminal 170 uses the downlink shared channel. In this case, the associated channels of the DSCH make a hard handover if required, whereby previous soft handover areas also become available to the DSCH.

Next, with reference to Figure 2, the update of an active set is illustrated in different situations. Figure 2 shows cells 210, 212, 214, 216, 218 of a cellular radio system, and the locations of subscriber terminals 200, 202, 204, 206, 208 in the cells. Cells 210, 212, 214 and 216 are at the same UMTS frequency, but cell 218 is either a GSM cell or a UMTS cell at a different frequency than the other cells 210, 212, 214, 216 described. Cell edges are descriptive of the coverage areas of the pilot channels (CPICH Ec/lo). The locations of subscriber terminals 200, 202, 204, 206, 208 and possible movement, denoted by an arrow, describe mobile phone users in different situations to be described in the following paragraphs.

Subscriber terminal 208 illustrates the determination of the size of the active set when the downlink shared channel (DSCH) is used. The user of subscriber terminal 208 wants to use services, to which a downlink shared channel is allocated. Herein, before the DSCH is allocated, the size of the active set of subscriber terminal 208 is set to one, whereby the DSCH also operates in the areas of soft handover, since only one cell at a time is in use in the active set. As subscriber terminal 208 moves, in accordance with the arrow, from cell 216 to cell 210, hard handover is carried out from cell 216 to cell 210. The hard handover is of type break-before-make, wherein the subscriber terminal simultaneously communicates with only one base station, i.e. first with the base station of cell 216 and then with the base station of cell 210. In other words, hard handover is not seamless as is soft and softer handover. The described use of the DSCH is optional, i.e. it can be used if the operator of the cellular radio system has access to the DSCH.

Subscriber terminal 200 illustrates the optimization of the size of the active set within the same frequency. The user of subscriber terminal 200 moves from cell 210 to cell 212, and communicates also with cell 214. In this case, all three cells 210, 212, 214 are in its active set. Channel element resources from each cell 210, 212, 214 are required for said user. In some situations, subscriber terminal 200 would not have to communicate with all three cells 210, 212, 214, for instance if the best cells 210, 212 provide a sufficiently good connection quality for subscriber terminal 200, the worst cell 214 can be deleted from the active set by setting the maximum size of the active set to two instead of the previous three. This allows the optimization of the use of the channel elements in the areas of soft handover.

Subscriber terminals 202, 204, 206 illustrate the operation in compressed mode and when solving power control problems. The user of subscriber terminal 206 moves from the UMTS network to an area having only GSM or another UMTS frequency in use. In this case, before moving, subscriber terminal 206 has to make measurements of cell 218 of the target network/frequency by means of the compressed mode. The size of the active set can be reduced if the quality and field strength experienced by subscriber terminal 206 are sufficiently good after the combination of the signals of one, two or three cells. If for instance only one cell is sufficient in the active set for subscriber terminal 206, the power control problems caused by the compressed mode can be directed only to that one cell, with which subscriber terminal 206 finally only communicates. In this case, it would be useful to set the maximum size of the active set of the subscriber terminal to one. At the same time, channel element resources are also saved. The users of subscriber terminals 202, 204 move in the area of the UMTS network, from where they are able to move to an overlapping GSM or UMTS frequency 218, if the services so require. Herein, before moving, subscriber terminal 202, 204 has to make measurements of the cells of the target network/frequency by means of the compressed mode. The size of the active set can be reduced if the quality and field strength experienced by the mobile are sufficiently good after the combination of the signals of one, two or three cells. If for instance only one cell is sufficient in the active set for subscriber terminal 202, 204, the power control problems caused by the compressed mode can be directed only to that one cell, with which the mobile communicates. In this case, it would be useful to set the maximum size of the active set of the mobile subscriber terminal 202, 204 to one.

Since the control unit 112, 122 can be implemented by software, the following presents a pseudocode describing a possible way to i m-plement the update of the size of the active set carried out in association with the update of the active set. Since the pseudocode uses structures, although slightly simplified, known from programming languages, e.g. the C programming language, the operation of the entire code is not described, since the sequence of functions described thereby is easy to follow by a person skilled in the art. At first, the constants and variables used in the pseudocode are described, then the contents of the measurement report are described, and finally the loops and conditional clauses, following each other as a sequence, for ca r-rying out the determination of the size of the active set. The result of the sequence is described in the Output clauses.

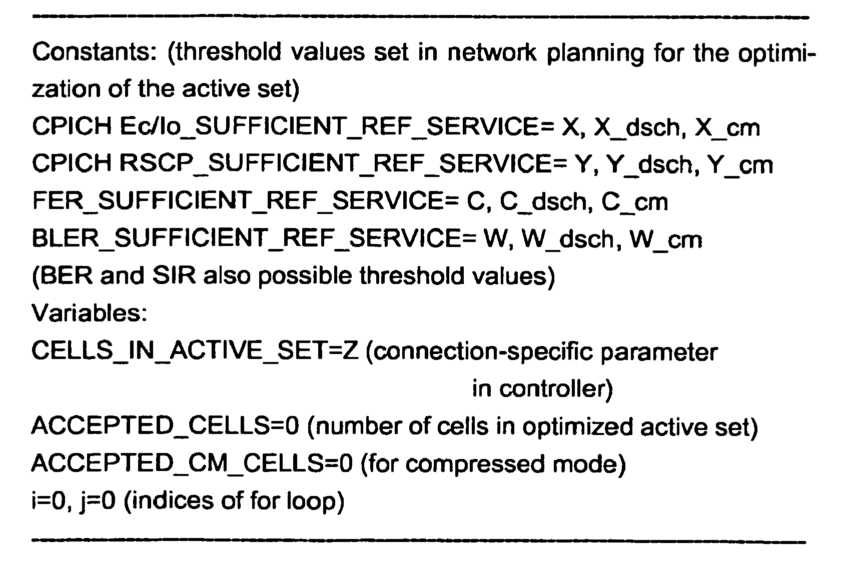

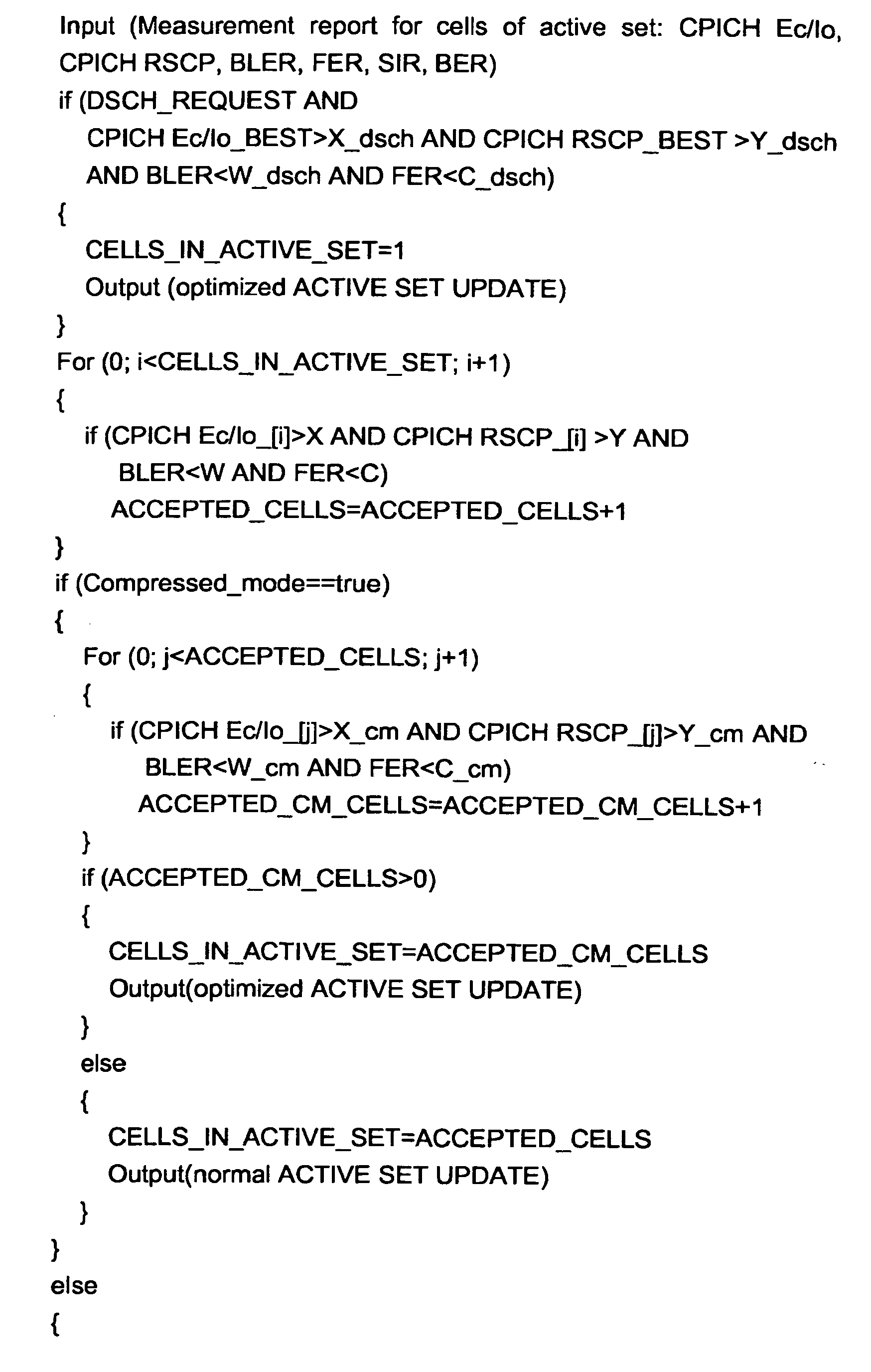

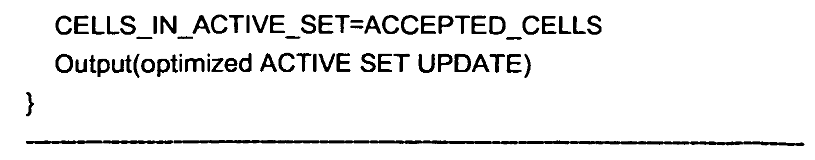

According to the Applicant's preliminary plans, when transferring speech service, the example values described in Table 2 could be used for the threshold values in soft handover in normal mode and compressed mode.

**Table 2**

| Parameter | Threshold value in normal mode | Threshold value in compressed mode |
|---|---|---|
| CPICH RSCP | -85 dBm | -80 dBm |
| CPICH Ec/lo | -10 dB | -5 dB |
| SIR | 10 dB | 15 dB |
| BER | 10⁻³ | 10⁻³ |
| BLER | 10⁻³ | 10⁻³ |
| FER | 10-² | 10⁻² |

Table 2 thus describes speech service; special threshold values can be used for different data rates, since the required transmission powers and field strengths increase as the data rate increases. Special threshold values can also be used when the DSCH is used. The threshold values used are naturally adapted suitable for the cellular radio system in question and its circumstances.

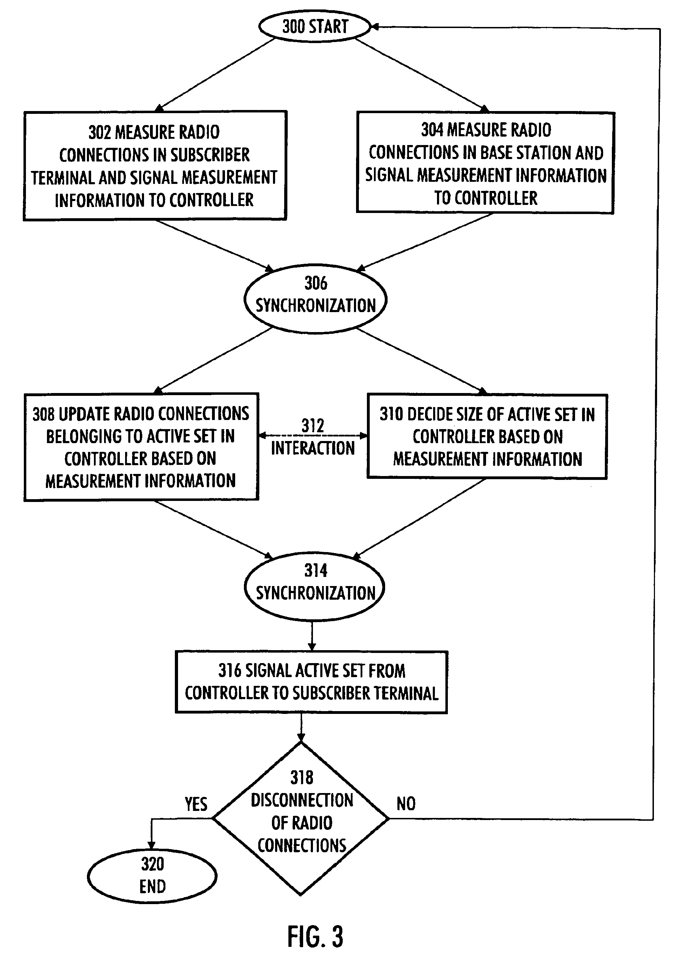

Figure 3 will be described next, a flow diagram illustrating a method of updating an active set of a subscriber terminal in a cellular radio system. The execution of the method starts in 300. 302 and 304 are then executed in parallel. In 302, the radio connections of at least one base station are measured in a subscriber terminal, and the downlink measurement information is signalled to a controller located in a network part of the cellular radio system. In 304, the radio connections of a subscriber terminal to a base station are measured in at least one base station, and the uplink measurement information is signalled to the controller. Naturally, 302 and 304 do not necessarily have to occur simultaneously, but uplink and downlink can also be measured independently of each other in time, for instance alternately.

306 is a synchronization point, from which the execution of the method can be continued once 302 and 304 are executed. 308 and 310 are described as parallel, but they may also be executed successively or interleaved. In 308, the radio connections belonging to an active set are updated in the controller on the basis of the measurement information. In 310, the size of the active set is decided upon in the controller on the basis of the measurement information. 312 describes the interaction between 308 and 310, which may be for instance information exchange and synchronization of the execution.

314 is a synchronization point from which the process continues once 308 and 310 are executed. Thereafter, in 316, the active set is signalled from the controller to the subscriber terminal.

In 318, a test is made to see if the radio connections are disconnected. If the radio connections are disconnected, the execution of the method can be ended in 320. If the radio connections are still used for data transmission, the process proceeds to 300, where the execution of the method is started from the beginning.

In an embodiment, when the size of the active set is being decided upon, besides the parameter descriptive of the signal strength and quality of the radio connection, included in the measurement information, also at least one of the following above described parameters are used: the parameter descriptive of the signal strength of the radio connection, the parameter descriptive of the error ratio of the radio connection, the parameter descriptive of the ratio between the signal and the interference of the radio connection. In an embodiment, the decided size of the active set is updated in the parameter determining the maximum size of the active set.

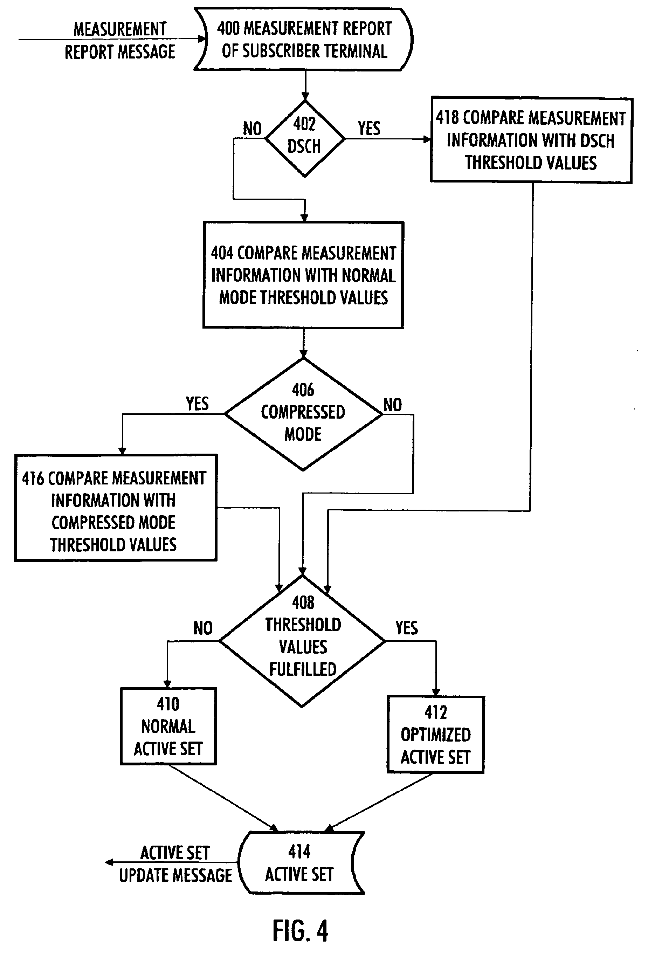

Some preferred embodiments of the method are illustrated next with reference to Figure 4. In 400, a measurement report of the subscriber terminal is obtained as input, for instance in a measurement report message, which is forwarded from a base station or base stations to the controller.

In an embodiment, when the size of the active set is being decided upon, the value of the parameter included in the measurement information is compared with a predetermined threshold value, and the size of the active set is determined on the basis of how the different parameters exceed or are below the threshold value. In an embodiment, when the subscriber terminal operates in normal mode, first threshold values are used, and when the subscriber terminal operates in compressed mode, second threshold values are used. In an embodiment, when the subscriber terminal uses the downlink shared channel (DSCH), third threshold values are used. In an embodiment, when the subscriber terminal uses the downlink shared channel, the decided size of the active set is one. In Figure 4, these embodiments are illustrated as a sequential chain, but it is apparent that the operation can be optimized by omitting some parts of the sequence or by changing the order between the parts.

In 402, a test is made to see if the DSCH is in use. If the DSCH is not in use, in 404 the measurement information is compared with the threshold values of the normal mode. If the DSCH is in use, in 418 the measurement information is compared with the threshold values of the DSCH. In 406, a test is made to see if the compressed mode is in use: if so, then the measurement information is compared with the threshold values of the compressed mode. In 408, a test is made to see if the threshold values used in the comparison were fulfilled: if the threshold values were fulfilled, then an active set optimized in accordance with 412 is used, otherwise a normal active set is used in accordance with 410.

An active set, either a normal or an optimized active set, is obtained as output 414. In an embodiment, an active set of the decided size is signalled from the controller to the subscriber terminal using an active set update message.

Although the invention is described above with reference to the example according to the attached drawings, it is apparent that the invention is not limited thereto, but can be modified in a plurality of ways within the inventive idea disclosed in the appended claims.

## Claims

1. A method of updating an active set of a subscriber terminal in a cellular radio system, comprising:
measuring (302) the radio connections of at least one base station to the subscriber terminal in the subscriber terminal, and signalling downlink measurement information to a controller located in a network part of the cellular radio system;
measuring (304) the radio connections of the subscriber terminal to a base station in at least one base station, and signalling uplink measurement information to the controller;
updating (308) the radio connections included in the active set in the controller on the basis of the measurement information;
signalling (316) the active set from the controller to the subscriber terminal,
whereby
deciding (310) the size of the active set in the controller on the basis of the measurement information using, not only a parameter descriptive of the signal strength and quality of the radio connection included in the measurement information, but also at least one of the following parameters belonging to the measurement information: a parameter descriptive of the signal strength of the radio connection, a parameter descriptive of the error ratio of the radio connection, a parameter descriptive of the ratio between the signal and the interference of the radio connection; comparing the value of a parameter included in the measurement information with a predetermined threshold value, using first threshold values when the subscriber terminal operates in normal mode and using second threshold values when the subscriber terminal operates in compressed mode, and determining the size of the active set based on how the different parameters exceed or are below the threshold value.

2. A method as claimed in claim 1, **characterized by** the parameter descriptive of the signal strength and quality of the radio connection being a parameter descriptive of the energy and interference included in one chip of a general pilot channel.

3. A method as claimed in claim 1, **characterized by** the parameter descriptive of the signal strength of the radio connection being the received signal power of a general pilot channel.

4. A method as claimed in claim 1, **characterized by** the parameter descriptive of the error ratio of the radio connection being at least one of the following parameters: the frame error ratio, the bit error ratio, the block error ratio.

5. A method as claimed in claim 1, **characterized by** the decided size of the active set being updated in the parameter determining the maximum size of the active set.

6. A method as claimed in claim 1, **characterized by** signalling the active set having the decided size from the controller to the subscriber terminal using an active set update message.

7. A controller (146, 166) to be placed in a network part of a cellular radio system and used for updating an active set of a subscriber terminal (170), comprising:
data transmission equipment (110, 120) configured to receive downlink measurement information signalled from the subscriber terminal (170), the information including results of measurements carried out in the subscriber terminal (170) regarding the radio connections (Uu, Um) of at least one base station (142, 144, 162, 164) to the subscriber terminal (170), and to receive uplink measurement information signalled from at least one base station (142, 144, 162, 164), the information including results of measurements carried out in the base station (142, 144, 162, 164) regarding the radio connections (Uu, Um) of the subscriber terminal (170) to the base station (142, 144, 162, 164);
a control unit (112, 122) configured to update the radio connections (Uu, Um) included in the active set on the basis of the measurement information, and to signal the active set to the subscriber terminal (170);
whereby
the control unit (112, 122) is further configured to decide the size of the active set on the basis of the measurement information using not only the parameter descriptive of the signal strength and quality of the radio connection included in the measurement information, but also at least one of the following parameters belonging to the measurement information: a parameter descriptive of the signal strength of the radio connection, a parameter descriptive of the error ratio of the radio connection, a parameter descriptive of the ratio between the signal and the interference of the radio connection; to compare the value of a parameter included in the measurement information with a predetermined threshold value, to use first threshold values when the subscriber terminal operates in normal mode and to use second threshold values when the subscriber terminal operates in compressed mode, and to determine the size of the active set based on how the different parameters exceed or are below the threshold value.

8. A controller as claimed in claim 7, **characterized in that** the parameter descriptive of the signal strength and quality of the radio connection is a parameter descriptive of the energy and interference included in one chip of a general pilot channel.

9. A controller as claimed in claim 7, **characterized in that** the parameter descriptive of the signal strength is the received signal power of a general pilot channel.

10. A controller as claimed in claim 7, **characterized in that** the parameter descriptive of the error ratio of the radio connection is at least one of the following parameters: the frame error ratio, the bit error ratio, the block error ratio.

11. A controller as claimed in claim 7, **characterized in that** the control unit (112, 122) is configured to update the decided size of the active set in the parameter determining the maximum size of the active set.

12. A controller as claimed in claim 7, **characterized in that** the control unit (112, 122) is configured to signal the active set having the decided size from the controller to the subscriber terminal using an active set update message.

## Patentansprüche

1. Ein Verfahren zur Aktualisierung eines sogenannten Aktive - Sets eines Teilnehmeranschlusses in einem Mobilfunksystem, umfassend:
- Messen (302) der Funkverbindungen von mindestens einer Basisstation zum Teilnehmeranschluss in dem Teilnehmeranschluss, und Anzeige der Abwärtsstreckenmessungsinformation an einen im Netzwerkteil des Mobilfunksystems gelegenen Controller;
- Messen (304) der Funkverbindungen des Teilnehmeranschlusses mit einer Basisstation in mindestens einer Basisstation, und Anzeige der Aufwärtsstreckenmessungsinformation an den Controller;
- Aktualisierung (308) der in einem sogenannten Active Set eingeschlossenen Funkverbindungen im Controller auf der Basis der Messinformation;
- Anzeige (316) des sogenannten Active Sets vom Controller an den Teilnehmeranschluss,
wodurch
die Entscheidung (310) über die Grösse des sogenannten Aktive Sets im Controller auf der Basis der Messinformation getroffen wird, indem nicht nur ein Parameter, der die Signalstärke und die Qualität der in der Messinformation enthaltene Funkverbindung enthält, sondern auch mindestens einer der folgenden zur Messinformation gehörenden Parameter benutzt wird: ein Parameter, der die Signalstärke der Funkverbindung beschreibt, ein Parameter, der die Fehlerratio der Funkverbindung beschreibt, ein Parameter, der die Ratio zwischen dem Signal und der Interferenz der Funkverbindung beschreibt; Vergleich eines in der Messinformation enthaltenen Parameterwertes mit einem vorbestimmten Schwellenwert,
wobei erste Schwellenwerte benutzt werden, wenn der Teilnehmeranschluss im Normalbetrieb funktionniert, und zweite Schwellenwerte benutzt werden, wenn der Teilnehmeranschluss im Kompressionsbetrieb funktionniert, und Bestimmung der Grösse des sogenannten Aktive Sets darauf basierend, ob die verschiedenen Parameter über oder unter dem Schwellenwert liegen.

2. Ein Verfahren nach Patentanspruch 1, **gekennzeichnet durch** den Parameter, der die Signalstärke und die Qualität der Funkverbindung beschreibt, wobei es ein Parameter ist, der die in einem Chip eines Hauptpilotkanals enthaltene Energie und Interferenz beschreibt.

3. Ein Verfahren nach Patentanspruch 1, **gekennzeichnet durch** den Parameter, der die Signalstärke und die Qualität der Funkverbindung beschreibt, und die empfangene Signalleistung des Hauptpilotkanals ist.

4. Ein Verfahren nach Patentanspruch 1, **gekennzeichnet durch** den Parameter, der die Fehlerratio der Funkverbindung beschreibt und mindestens einer der folgenden Parameter ist: Fehlerratio des Datenübertragungsblocks, Bitfehlerratio, Blockfehlerratio.

5. Ein Verfahren nach Patentanspruch 1, **gekennzeichnet durch** die entschiedene Grösse des aktualisierten sogenannten Aktive Sets im Parameter, der die maximale Grösse des sogenannten Aktive Sets bestimmt.

6. Ein Verfahren nach Patentanspruch 1, **gekennzeichnet durch** die Anzeige des die entschiedene Grösse aufweisenden sogenannten Active Sets vom Controller an den Teilnehmeranschluss, wobei eine Nachricht zur Aktualisierung des sogenannten Active Sets benutzt wird.

7. Ein Controller (146, 166), der in dem Netzwerkteil eines Mobilfunksystems anzuordnen ist und zur Aktualisierung eines sogenannten Active Sets eines Teilnehmeranschlusses (170) benutzt wird, umfassend:
- eine Datenübertragungsausrüstung (110, 120), die zum Empfang der durch den Teilnehmeranschluss angezeigten Abwärtsmessungsinformation konfiguriert ist, wobei die Information Ergebnisse von Messungen umfasst, die im Teilnehmeranschluss (170) betreffend die Funkverbindungen (Uu, Um) zwischen mindestens einer Basisstation (142, 144, 162, 164) und dem Teilnehmeranschluss (170) ausgeführt sind, und die zum Empfang der von mindestens einer Basisstation (142, 144, 162, 164) angezeigten Aufwärtsmessungsinformation konfiguriert ist, wobei die Information Ergebnisse von Messungen umfasst, die in der Basisstation (142, 144, 162, 164) betreffend die Funkverbindungen (Uu, Um) zwischen dem Teilnehmeranschluss (170) und der Basisstation (142, 144, 162, 164) ausgeführt sind,
- eine Kontrolleinheit (112, 122), die zur Aktualisierung der im sogenannten Active Set enthaltenen Funkverbindungen (Uu, Um) auf der Basis der Messungsinformation , und der Anzeige des sogenannten Active Sets an den Teilnehmeranschluss (170) konfiguriert ist;
wobei
die Kontrolleinheit (112, 122) ausserdem konfiguriert ist, um die Grösse des sogenannten Active Sets auf der Basis der Messungsinformation zu bestimmen, indem nicht nur der Parameter, der die Signalstärke und die Qualität der in der Messinformation enthaltene Funkverbindung enthält, sondern auch mindestens einer der folgenden zur Messinformation gehörenden Parameter benutzt wird: ein Parameter, der die Signalstärke der Funkverbindung beschreibt, ein Paramter, der die Fehlerratio der Funkverbindung beschreibt, ein Parameter, der die Ratio zwischen dem Signal und der Interferenz der Funkverbindung beschreibt; Vergleich eines in der Messinformation enthaltenen Parameterwertes mit einem vorbestimmten Schwellenwert, wobei erste Schwellenwerte benutzt werden, wenn der Teilnehmeranschluss im Normalbetrieb funktionniert, und zweite Schwellenwerte benutzt werden, wenn der Teilnehmeranschluss im Kompressionsbetrieb funktionniert, und Bestimmung der Grösse des sogenannten Aktive Sets auf der Basis ob die verschiedenen Parameter über oder unter dem Schwellenwert liegen.

8. Ein Controller nach Patentanspruch 7, **dadurch gekennzeichnet, dass** der Parameter, der die Signalstärke und die Qualität der Funkverbindung beschreibt, ein Parameter ist, der die in einem Chip eines Hauptpilotkanals enthaltene Energie und Interferenz beschreibt.

9. Ein Controller nach Patentanspruch 7, **dadurch gekennzeichnet, dass** der Parameter, der die Signalstärke beschreibt, die empfangene Signalleistung des Hauptpilotkanals ist.

10. Ein Controller nach Patentanspruch 7, **dadurch gekennzeichnet, dass** der Parameter, der die Fehlerratio der Funkverbindung beschreibt, mindestens einer der folgenden Parameter ist: Fehlerratio des Datenübertragungsblocks, Bitfehlerratio, Blockfehlerratio.

11. Ein Controller nach Patentanspruch 7, **dadurch gekennzeichnet, dass** die Steuereinheit (112, 122) so konfiguriert ist, um die entschiedene Grösse des sogenannten Aktive Sets im Parameter, der die maximale Grösse des sogenannten Aktive Sets bestimmt, zu aktualisieren.

12. Ein Controller nach Patentanspruch 7, **dadurch gekennzeichnet, dass** die Steuereinheit (112, 122) so konfiguriert ist, dass das die entschiedene Grösse aufweisende sogenannte Active Set vom Controller an den Teilnehmeranschluss angezeigt wird, wobei eine Nachricht zur Aktualisierung des sogenannten Active Sets benutzt wird.

## Revendications

1. Un procédé pour mettre à jour un active set d'une borne d'abonné dans un système de téléphonie cellulaire, comprenant :
la mesure (302) des connections radio d'au moins une station de base par rapport à la borne d'abonné dans la borne d'abonné, et le signalement de l'information de mesure de la liaison descendante à un contrôleur situé dans une partie de réseau du système de téléphonie cellulaire ;
la mesure (304) des connections radio de la borne d'abonné par rapport à la station de base dans au moins une station de base, et le signalement de l'information de mesure de la liaison montante au contrôleur ;
la mise à jour (308) des connections radio incluses dans l'active set dans le contrôleur sur la base de l'information de mesure ;
le signalement (316) de l'active set par le contrôleur à la borne d'abonné,
où
la décision (310) de la taille de l'active set dans le contrôleur en utilisant la base de l'information de mesure, n'est pas seulement un paramètre descriptif de l'intensité du signal et de la qualité de la connexion radio incluse dans l'information de mesure,
mais également au moins un des paramètres suivants appartenant à l'information de mesure : un paramètre descriptif de l'intensité du signal de la connexion radio, un paramètre descriptif du ratio d'erreur de la connexion radio, un paramètre descriptif du ratio entre le signal et l'interférence de la connexion radio ; la comparaison de la valeur du paramètre inclus dans l'information de mesure avec une valeur de seuil en utilisant des premières valeurs de seuil lorsque la borne d'abonné fonctionne en mode normal et en utilisant des secondes valeurs de seuil lorsque la borne d'abonné fonctionne en un mode compressé , et la détermination de la taille de l'active set en se basant sur la façon dont les différents paramètres dépassent ou sont inférieurs à la valeur de seuil.

2. Un procédé comme revendiqué dans la revendication 1, **caractérisé par** le paramètre descriptif de la force du signal et la qualité de la connexion radio étant un paramètre descriptif de l'énergie et de l'interférence comprise dans une puce d'un canal pilote principal.

3. Un procédé comme revendiqué dans la revendication 1, **caractérisé par** le paramètre descriptif de l'intensité du signal de la connexion radio qui est l'énergie du signal reçu du canal pilote principal.

4. Un procédé comme revendiqué dans la revendication 1, **caractérisé par** le paramètre descriptif du ratio d'erreur de la connexion radio qui correspond au moins à un des paramètres suivants : le ratio d'erreur de la transmission de données, le ratio d'erreur de bit, le ratio d'erreur de block .

5. Un procédé comme revendiqué dans la revendication 1, **caractérisé par** la taille choisie de l'active set qui a été mis à jour dans le paramètre déterminant la taille maximum de l'active set.

6. Un procédé comme revendiqué dans la revendication 1, **caractérisé par** la signalisation de l'active set ayant la taille décidée par le contrôleur à la borne d'abonné en utilisant un message de mise à jour de l'active set.

7. Un contrôleur (146, 166) à placer dans une partie de réseau d'un système de téléphonie cellulaire et utilisé pour la mise à jour d'un active set d'une borne d'abonné (170), comprenant :
un équipement de transmission de données (110, 120) configuré pour recevoir une information de mesure de liaison descendante signalée par la borne d'abonné, l'information comprenant les résultats de mesures réalisées dans la borne d'abonné (170) concernant aux connexions radio (Uu, Um) d'au moins une station de base (142, 144, 162, 164) à la borne d'abonné (170), et pour recevoir l'information de mesure de la liaison montante signalée par au moins une station de base (142, 144, 162, 164), l'information comprenant les résultats des mesures réalisées dans la station de base (142, 144, 162, 164) concernant les connexions radio (Uu, Um) de la borne d'abonné (170) vers la station de base (142, 144, 162, 164) ;
une unité de contrôle (112, 122) configurée pour mettre à jour les connexions radio (Uu, Um) comprises dans l'active set sur la base de l'information de mesure, et pour signaler l'active set à la borne d'abonné (170) ;
où
l'unité de contrôle (112, 122) est, en outre, configurée pour choisir la taille de l'active set sur la base de l'information de mesure en n'utilisant pas uniquement le paramètre descriptif de l'intensité du signal et la qualité de la connexion radio comprise dans l'information de mesure, mais également au moins un des paramètres suivants appartenant à l'information de mesure : un paramètre descriptif de l'intensité du signal de la connexion radio, un paramètre descriptif du ratio d'erreur de la connexion radio, un paramètre descriptif du ratio entre le signal et l'interférence de la connexion radio ; pour comparer la valeur d'un paramètre incluse dans l'information de mesure avec une valeur de seuil prédéterminée, pour utiliser les premières valeurs de seuil lorsque la borne d'abonné fonctionne en mode normal et pour utiliser les secondes valeurs de seuil lorsque la borne d'abonné fonctionne en mode compressé, et pour déterminer la taille de l'active set en se basant sur la façon dont les différents paramètres dépassent ou sont inférieures à la valeur de seuil.

8. Un contrôleur comme revendiqué dans la revendication 7, **caractérisé en ce que** le paramètre descriptif de l'intensité de signal et la qualité de la connexion radio est un paramètre descriptif de l'énergie et de l'interférence comprise dans une puce d'un canal pilote principal.

9. Un contrôleur comme revendiqué dans la revendication 7, **caractérisé en ce que** le paramètre descriptif de l'intensité de signal est la puissance reçue du signal d'un canal pilote principal.

10. Un contrôleur comme revendiqué dans la revendication 7, **caractérisé en ce que** le paramètre descriptif du ratio d'erreur de la connexion radio est au moins l'un des paramètres suivants : le ratio d'erreur de la transmission de données , le ratio d'erreur de bit , le ratio d'erreur de block .

11. Un contrôleur comme revendiqué dans la revendication 7, **caractérisé en ce que** l'unité de contrôle (112, 122) est configurée pour la mise à jour de la taille choisie de l'active set dans le paramètre déterminant la taille maximum de l'active set.

12. Un contrôleur comme revendiqué dans la revendication 7, **caractérisé en ce que** l'unité de contrôle (112, 122) est configurée pour signaler l'active set ayant la taille choisie par le contrôleur à la borne d'abonné en utilisant un message de mise à jour de l'active set.
